# EUROPEAN PATENT SPECIFICATION

(11) **EP 2 617 121 B1**
(45) Date of publication and mention of the grant of the patent: **20.08.2014**
(21) Application number: 11758186.8
(22) Date of filing: 14.09.2011
(51) Int. Cl.: H02K 1/27

(54) **ROTOR FOR MODULATED POLE MACHINE**
ROTOR FÜR MODULIERTE POLMASCHINE
ROTOR POUR UNE MACHINE À PÔLES MODULÉE

(30) Priority: 20.09.2010 US 384514 P; 17.09.2010 DK 201000833
(43) Date of publication of application: 24.07.2013
(73) Proprietor: Höganäs AB (publ), 26383 Höganäs (SE)
(72) Inventor: ATKINSON, Glynn, Tynemouth NE30 2JP (GB); JACK, Alan, Northumberland NE46 2NB (GB); PENNANDER, Lars-Olov, S-254 50 Helsingborg (SE)
(74) Representative: de Maré, Fredrick
(86) International application number: PCT/EP2011/065905
(87) International publication number: WO 2012/035044

(56) References cited:
- EP-A2- 1 777 795
- FR-A1- 2 519 483
- US-A1- 2006 103 254
- US-B1- 6 208 054

## Description

### Field of the invention

The invention relates to a rotor for modulated pole machines such as a motor, and more particularly to a rotor for modulated pole machines that are easily manufacturable in large quantities and are suitable for operation at high speed.

### Background of the invention

Over the years, electric machine designs such as modulated pole machines, e.g. claw pole machines, Lundell machines and transverse flux machines (TFM) have become more and more interesting. Electric machines using the principles of these machines were disclosed as early as about 1910 by Alexandersson and Fessenden. One of the most important reasons for the increasing interest is that the design enables a very high torque output in relation to, for instance, induction machines, switched reluctance machines and even permanent magnet brushless machines. Further, such machines are advantageous in that the coil is often easy to manufacture. However, one of the drawbacks of the design is that they are typically relatively expensive to manufacture and that they experience a high leakage flux which causes a low power factor and a need for more magnetic material. The low power factor requires an up-sized power electronic circuit (or power supply when the machine is used synchronously) that also increases the volume, weight and cost of the total drive.

The modulated pole electric machine stator is basically characterised by the use of a central single coil that will magnetically feed multiple teeth formed by a soft magnetic core structure. The soft magnetic core is then formed around the coil, while for other common electrical machine structures the coil is formed around a tooth of the core section. Examples of the modulated pole machine topology are sometimes recognised as e.g. Claw-pole-, Crow-feet-, Lundell- or TFM-machines. The modulated pole machine with buried magnets is further characterised by an active rotor structure including a plurality of permanent magnets being separated by rotor pole sections.

US 2006/0103254 discloses a rotor for an electric machine having a rotor core with a plurality of poles.

EP 1777795 discloses a permanent magnet pole assembly for a rotor including a plurality of laminations.

WO 2007/024184 discloses an active rotor structure built up from an even number of segments, whereas half the number of segments is made of soft magnetic material and the other half number of segments is made from permanent magnet material. The permanent magnets are arranged so that the magnetization direction of the permanent magnets is substantially circumferential, i.e. the north and south pole, respectively, is pointing in a substantially circumferential direction.

It is generally desirable to provide a rotor for a modulated pole machine that is relatively inexpensive in production and assembly. It is further desirable to provide such a rotor that has good performance parameters, such as high structural stability, low magnetic reluctance, efficient flux path guidance, low weight and inertia, etc.

Buried magnet machines may be used for high power, high speed electrical machines, e.g. machines for use in electric and hybrid vehicles. These machines offer significant weight, size, efficiency and cost advantages over alternative technologies. One of the benefits relates to the reduction in the rating (and hence cost) of the converter used to drive the machine that accrues from the reduction in current that occurs when the machine has significant torque resulting from magnetic reluctance effects. Reluctance torque results when different magnetic reluctance occurs in axes that are half a pole pitch apart. Machines which have this feature are described as having saliency.

A common configuration for these machines is that the air gap between the stator and the rotor is placed in a circumferential/axial plane. Changing magnetic fields occur in both stator and rotor and hence it may be desirable to employ materials for the magnetic core in both stator and rotor which provide electrical insulation to avoid the high losses that would occur from eddy currents induced in the core by these changing fields.

In some high speed permanent magnet machines using buried magnets a limiting factor may be the mechanical stresses caused by the centrifugal forces resulting from rotation. The forces are exerted on the magnets, which are often weak in tension, and on the laminated rotor core.

### Summary

According to a first aspect, disclosed herein is a rotor for an inner-rotor modulated pole machine, the rotor being configured to generate a rotor magnetic field for interaction with a stator magnetic field of a stator of the modulated pole machine, wherein said rotor is adapted to rotate around a longitudinal axis of the rotor, the rotor defining during rotation a cylindrical outer surface surrounding the longitudinal axis; wherein the rotor comprises:
- a plurality of permanent magnets arranged circumferentially around the longitudinal axis, each permanent magnet being magnetised in a direction of magnetisation so as to generate a magnetic flux,
- a plurality of axial flux guiding members each adapted to provide an at least two-dimensional flux path for the magnetic flux generated by a respective one of the plurality of permanent magnets, the two-dimensional flux path comprising an axial component;
- a support structure comprising an inner tubular support member arranged radially inward of the plurality of permanent magnets; and
- at least one outer flux guiding member adapted to provide a path in at least a radial direction for the magnetic flux generated by one or more of the plurality of permanent magnets wherein the axial flux guiding members are separate components different from the outer flux guiding member.

Hence, disclosed herein are embodiments of a permanent magnet rotor that show an efficient magnetic flux path in the axial direction of the machine in a design using a main air-gap flux path in the radial direction.

Furthermore, embodiments of the rotor disclosed herein have a high saliency i.e. they show a significant variation of the overall flux path reluctance between a direct (d) and a quadrature (q) axis of a suitable representation, thus providing significant additional reluctance torque. In buried magnet machines the difference in reluctance may be facilitated by using laminated magnetic material to channel the magnetic flux past the magnets in an axis at right angles (electrically i.e. an angle equal to one half of one pole pitch) to their magnetisation.

Furthermore, embodiments of the rotor described herein provide a well-defined air-gap, even at high rotational speeds of the rotor.

The plurality of permanent magnets may be arranged so that every second magnet around the circumference is reversed in magnetisation direction. Thereby individual rotor pole sections may only interface with magnets showing equal polarity.

In some embodiments the permanent magnets are mounted on an outer mounting surface of the inner tubular support member.

The rotor may comprise any number of permanent magnets such as between 2 and 200, between 5 and 60 or between 10 and 30. The inner and/or an outer tubular support member may have any axial length. In some embodiments, the axial length of the inner and/or outer tubular support member corresponds to the axial length of the permanent magnets and/or the axial flux guiding members.

The rotor, e.g. the support structure, may comprise means for transferring the torque generated by the interaction between the rotor and the stator. In some embodiments the support structure is connected to a shaft for transferring the generated torque.

In some embodiments, the axial flux guiding members are made from a soft magnetic material such as soft magnetic powder, thereby simplifying the manufacturing of the rotor, and providing an efficient magnetic flux concentration, utilizing the advantage of effective three-dimensional flux paths in the soft magnetic material allowing radial, axial and circumferential flux path components. Thereby the axial flux guiding members may efficiently be made in the same operation by use of a powder forming method where the forming may be made in a single compaction tool set up. Furthermore, the radial thickness of the rotor may be reduced as the flux path in all three dimensions may efficiently be provided in a single flux guiding member. This further allows for tangentially wider magnets, since the permanent magnets then can be placed on a larger diameter with a larger perimeter and the air-gap diameter is held constant. This can allow use of less expensive magnets (e.g. Ferrites), while increasing their thickness and cross-sectional area so as to deliver a sufficient magnetic field strength.

The soft magnetic powder may e.g. be a soft magnetic Iron powder or powder containing Co or Ni or alloys containing parts of the same. The soft magnetic powder could be a substantially pure water atomised iron powder or a sponge iron powder having irregular shaped particles which have been coated with an electrical insulation. In this context the term "substantially pure" means that the powder should be substantially free from inclusions and that the amount of the impurities O, C and N should be kept at a minimum. The average particle sizes are generally below 300 µm and above 10 µm.

However, any soft magnetic metal powder or metal alloy powder may be used as long as the soft magnetic properties are sufficient and that the powder is suitable for die compaction.

The electrical insulation of the powder particles may be made of an inorganic material. Especially suitable are the type of insulation disclosed in US 6348265, which concerns particles of a base powder consisting of essentially pure iron having an insulating oxygen- and phosphorus-containing barrier. Powders having insulated particles are available as Somaloy® 500, Somaloy® 550 or Samaloy® 700 available from Höganas AB, Sweden.

The outer flux guiding member provides a radial magnetic flux path and an interface surface facing radially outward to an active air gap of the rotor, allowing the magnetic flux to communicate with the stator via the active air gap. The outer flux guiding member may further provide a circumferential flux path; in particular, the outer flux guiding member may provide an at least two-dimensional flux path in the radial/circumferential plane. When the outer flux guiding member comprises an outer tubular support structure surrounding the permanent magnets and the axial flux guiding members, the strength of the rotor structure is increased thus allowing for improved high-speed operation.

The axial flux guiding member provides an axial magnetic flux path. In some embodiments the rotor comprises axial flux guiding members that may e.g. be formed as soft magnetic components manufactured from metal powder or as laminations oriented essentially in a plane parallel to the axial direction of the rotor, e.g. the radial/axial plane or the circumferential/axial plane. The axial flux guiding member may provide an at least two-dimensional flux path in the axial/circumferential plane or the axial/radial plane, thus allowing for an axial flux concentration and, at the same time, an efficient communication of the flux path between the axial flux guiding member and the outer flux guiding member. The axial flux guiding members may thus be placed so as to cause some, or all, of the axial magnetic return path to occur in the rotor. Consequently, in embodiments of a modulated pole machine it is possible to avoid an axial magnetic path in the stator, thus allowing for a simpler and less expensive stator construction, and avoiding unwanted magnetic leakage paths that may otherwise occur around only the coil and around only the magnet, without linking the magnet and the coil.

The axial flux guiding members are provided as separate components different from the outer flux guiding members. The axial flux guiding members may be disposed in a region radially outwards from the magnets or tangentially adjacent to the magnets. These axial flux guiding members may be disposed in slots or openings within other laminations arranged in the radial/circumferential orientation to provide the right orientation to minimise eddy currents resulting from circumferential components of the field. The axial flux guiding members may be placed in a region where the field is substantially radial and/or axial (or where it is substantially constant), e.g. close to the magnets. When the axial flux guiding members are formed as laminations, the laminations may be oriented with the plane of the laminations arranged in the direction of the magnet's magnetisation direction.

The axial flux guiding members may be restrained against centrifugal forces at the axial ends of the rotor core, e.g. by endplates. In some embodiments, the rotor comprises end plates at each axial end of the rotor; and at least a part of each axial flux guiding member axially extends through respective holes of the end plates. Alternatively or additionally, the axial flux guiding members may be coupled to other support structures at the respective axial ends of the rotor core for supporting the axial flux guiding members in a radial direction against centrifugal forces. The axial flux guiding members then become beams taking their own centrifugal stresses but also the centrifugal stresses of the magnets, relieving spokes in the radial/circumferential laminations of this role. It is a further benefit of restraining the axial flux guiding members that spokes in the radial/circumferential laminations may be removed or at least reduced. This reduces or even avoids magnetic shunting effects which in turn allows smaller (and hence cheaper) magnets to be used, thus resulting in a smaller (and hence cheaper) machine.

Since the magnetic structure of the rotor is not impaired by the introduction of the axial flux guiding members nor even by making the radial dimensions of these pieces substantial there may be a large improvement in the ability of embodiments of the rotor structure defined herein to handle centrifugal forces. That means that machines of a given dimension can run substantially faster giving a proportionate increase in specific output and a consequential reduction in size, weight, efficiency and cost. It also means that much larger rotors (for higher output applications) running at a given speed are facilitated.

In some embodiments, when the axial flux guiding members are restrained against centrifugal forces as described above, the axial flux guiding members may in turn restrain at least a part of the radial/circumferential laminations of the rotor, e.g. by placing the axial flux guiding members in a hole in the radial/circumferential laminations. This allows a further increase in speed and/or rotor diameter.

The combination of axial flux guiding members (which may be restrained at the axial ends of the core) with radial/circumferential laminations in the arrangements described herein greatly improves the mechanical integrity and hence speed/size limits whilst at the same time providing a good axial magnetic path without major eddy current losses being incurred.

A good axial magnetic path in the rotor allows the axial magnetic return path in the stator (i.e. the claws) to be reduced or even eliminated meaning a size reduction but more importantly a good axial path is beneficial to preserve saliency and hence achieve significant reluctance torque. This is a highly desirable feature if the machine is to be competitive when it is inverter driven.

When the permanent magnets are circumferentially separated from each other by respective spoke members, the strength of the rotor structure is further increased. When the spoke members are further adapted to provide a magnetic flux path at least in a radial direction, an efficient and compact rotor structure is provided. The spoke members may be made of laminated metal sheets.

In some embodiments the tubular support member is made of laminated metal sheets providing a magnetic flux path in the radial-tangential plane; the permanent magnets are magnetised in the radial direction; and each axial flux guiding member is formed as a metal-sheet laminated tooth body member extending in the radial direction outwards from one of the permanent magnets, and adapted to provide a magnetic flux path substantially in the radial/axial plane; and the rotor comprises a plurality of outer flux guiding members, each formed as a metal-sheet laminated tooth tip member radially extending outwards from a respective one of the metal-sheet laminated tooth body members, and adapted to provide a magnetic flux path in the radial-tangential plane. The metal sheet laminate may be a steel-sheet laminate.

In some embodiments the tubular support member is made of laminated metal sheets providing a magnetic flux path in at least the radial direction; and the permanent magnets are magnetised in the radial direction; and each of the axial flux guiding members is formed as a tooth body member made from a soft magnetic component, e.g. soft magnetic powder component, extending in the radial direction outwards from one of the permanent magnets and adapted to provide a magnetic flux path in all three dimensions (radial, tangential/circumferential, axial). The outer flux guiding member may be formed as a continuous tubular structure, e.g. a sleeve, of laminated metal-sheets surrounding the tooth body members

In some embodiments the permanent magnets are magnetised in the circumferential direction; each permanent magnets may be sandwiched in the circumferential direction between two of the axial flux guiding members; and each of the axial flux guiding members may be formed as a metal-sheet laminated member adapted to provide a magnetic flux path having at least a circumferential and an axial component. The outer flux guiding member may be formed from laminated metal-sheets forming a tubular structure surrounding the permanent magnets and the axial flux guiding members. The laminated metal-sheets forming the outer flux guiding member may further comprise spoke members radially extending inwards from the outer tubular member. Each spoke member may separate, in the circumferential direction, two of the permanent magnets sandwiched between respective axial flux guiding members.

In some embodiments, the rotor may comprise two outer flux guiding members, each having an axial length smaller than the axial length of the permanent magnets and/or the axial flux guiding members. In such an embodiment, the outer flux guiding members may be positioned proximal to the respective axial ends of the rotor, leaving a circumferential gap between them. Consequently, as the axial flux guiding members allow for an axial flux concentration towards the axial position of the outer flux guiding members, the outer flux guiding members do not need to cover the entire axial extent of the permanent magnets. Hence, the weight and/or moment of inertia of the rotor structure may be reduced without significantly impairing the magnetic properties. In some embodiments, the axial extent and position of the outer flux guiding members may be limited so as to correspond to the axial width of the active air gap between the rotor and the stator. In some embodiments, the gap my at least partially be filled by an annular support member, e.g. a ribbon, a sleeve or a tube, that restrains the permanent magnets and/or axial flux guiding members against centrifugal forces. The annular support member may be made from non-magnetic material, e.g. aluminium, a magnesium alloy, a polymer-based material, a composited material, a fibre-material such as glass fibres, carbon-fibres or the like, or combinations of the above.

According to another aspect, disclosed herein is an electrical, rotary machine, e.g. a modulated pole machine, said machine comprising a stator and a rotor as described herein. The stator may be a stator with or without partially overlapping stator pole claws.

In some embodiments, the stator comprises: a first stator core section being substantially circular and including a plurality of teeth, a second stator core section being substantially circular and including a plurality of teeth, a coil arranged between the first and second circular stator core sections, wherein the first stator core section, the second stator core section, the coil and the rotor are encircling a common geometric axis defined by the longitudinal axis of the rotor, and wherein the plurality of teeth of the first stator core section and the second stator core section are arranged to protrude towards the rotor; wherein the teeth of the second stator core section are circumferentially displaced in relation to the teeth of the first stator core section.

The different aspects of the present invention can be implemented in different ways including the rotor and the electric rotary machine described above and in the following and further devices and product means, each yielding one or more of the benefits and advantages described in connection with at least one of the aspects described above, and each having one or more preferred embodiments corresponding to the preferred embodiments described in connection with at least one of the aspects described above and/or disclosed in the dependent claims. Furthermore, it will be appreciated that embodiments described in connection with one of the aspects described herein may equally be applied to the other aspects.

### Brief description of the drawings

The above and/or additional objects, features and advantages of the present invention, will be further elucidated by the following illustrative and nonlimiting detailed description of embodiments of the present invention, with reference to the appended drawings, wherein:
Figure 1 a shows an exploded, perspective view of a prior art modulated pole machine.
Figure 1b shows a cross-sectional view of a prior art modulated pole machine.
Figure 2 shows a schematic view of an example of a stator for a modulated pole machine.
Figure 3 shows a schematic view of another example of a stator for a modulated pole machine.
Figures 4-6 show examples of a rotor for a modulated pole machine.
Figures 7-8 show an example of a rotor for a modulated pole machine and a stator in different relative positions to each other.
Figures 9-11 show further examples of a rotor for a modulated pole machine.
Figures 12a-d show cross-sectional views in a radial-axial plane of different embodiments of a rotor.
Figures 13a-b and 14a-b show further examples of a rotor for a modulated pole machine.

### Detailed description

In the following description, reference is made to the accompanying figures, which show by way of illustration how the invention may be practiced.

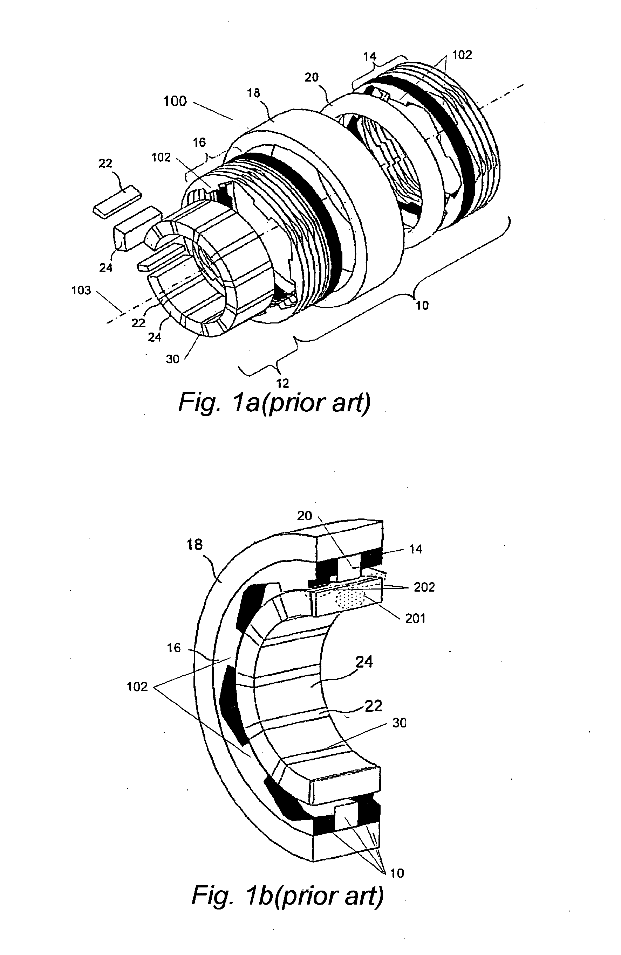

This invention is in the field of a modulated pole electric machine 100 of which one example is shown in figure 1 a in a schematic, exploded, perspective view. The modulated pole electric machine stator 10 is basically characterised by the use of a central single coil 20 that will magnetically feed multiple teeth 102 formed by the soft magnetic core structure. The stator core is then formed around the coil 20 while for other common electrical machine structures the coil is formed around the individual tooth core section. Examples of the modulated pole machine topology are sometimes recognised as e.g. Claw-pole-, Crow-feet-, Lundell- or TFM-machines. More particularly the shown modulated pole electric machine 100 comprises two stator core sections 14, 16 each including a plurality of teeth 102 and being substantially circular, a coil 20 arranged between the first and second circular stator core sections, and a rotor 30 including a plurality of permanent magnets 22. Further, the stator core sections 14, 16, the coil 20 and the rotor 30 are encircling a common geometric axis 103, and the plurality of teeth of the two stator core sections 14, 16 are arranged to protrude towards the rotor 30 for forming a closed circuit flux path. The machine in figure 1 is of the radial type as the stator teeth protrudes in a radial direction towards the rotor in this case with the stator surrounding the rotor. However, the stator could equally well be placed interiorly with respect to the rotor which type is also illustrated in some of the following figures. The scope of invention as presented in the following is not restricted to any specific type of modulated pole electric machine. For example, the invention is not restricted to single phase machines but can equally well be applied to multi phase machines.

The active rotor structure 30 is built up from an even number of segments 22, 24 whereas half the numbers of segments also called rotor pole sections 24 are made of soft magnetic material and the other half of number of segments of permanent magnet material 22. The state of art method is to produce these segments as individual components. Often the number of segments can be rather large typically of order 10 - 50 individual sections. The permanent magnets 22 are arranged so that the magnetization directions of the permanent magnets are substantially circumferential, i.e. the north and the south pole, respectively, is facing in a substantially circumferential direction. Further, every second permanent magnet 22, counted circumferentially is arranged having its magnetization direction in the opposite direction in relation to the other permanent magnets. The magnetic functionality of the soft magnetic pole sections 24 in the desired machine structure is fully three dimensional and it is required that the soft magnetic pole section 24 is able to efficiently carry varying magnetic flux with high magnetic permeability in all three space directions.

Figure 1b shows the same radial modulated pole electric machine as from fig 1 but in a cross-sectional view of the assembled machine showing more clearly how the stator teeth 102 extend towards the rotor and how the stator teeth of the two stator core sections 14, 16 are rotationally displaced in relation to each other.

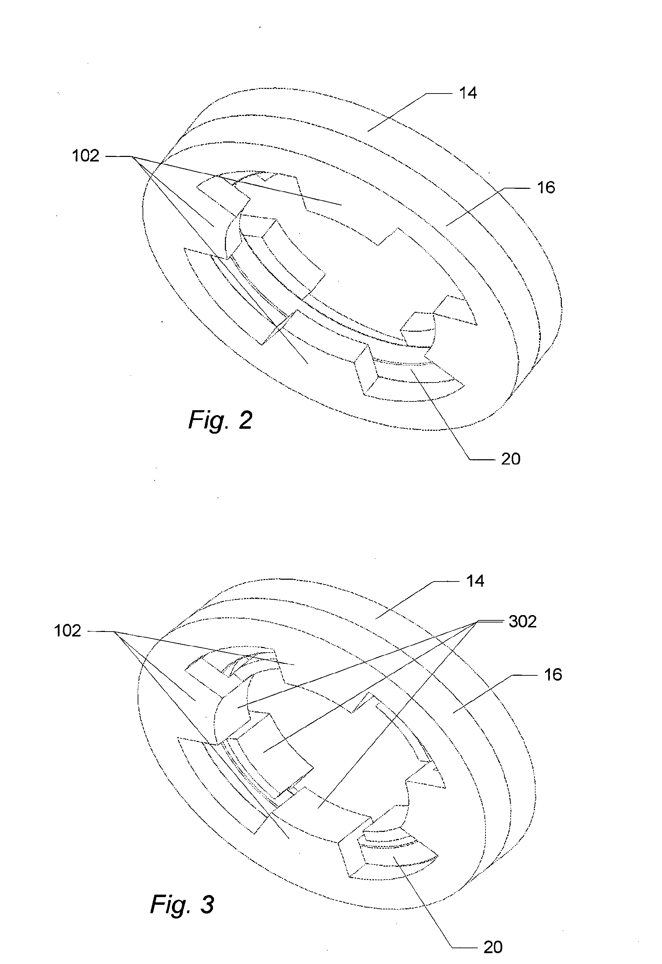

Figure 2 shows a schematic view of an example of a stator for a modulated pole machine. Figure 3 shows a schematic view of another example of a stator for a modulated pole machine. Both stators comprise two stator core sections 14, 16, and a coil 20 sandwiched between the stator core sections; and the stator core sections each have a plurality of radially extending teeth 102 such that the stator teeth of the two stator core sections 14, 16 are rotationally displaced in relation to each other; all as described in connection with fig. 1. While the stator of fig. 2 is similar to the stator described in connection with fig. 1, the teeth 102 of the stator of fig. 3 are formed as claw-poles, i.e. they have axially extending claw pole sections 302. The claw pole sections 302 extend axially from the tips of the radially protruding teeth 102 towards the coil and the respective other stator pole section. The claw poles extend axially partially across the axial length of the stator.

In the following, examples of rotors will be described in greater detail that may be used as a part of the modulated pole electric machine shown in figures 1a-b and/or in combination with one of the stators shown in figs. 2 and 3. It should be understood that the rotors described in this application may be used together with stators of modulated pole machines of different types than the one described above.

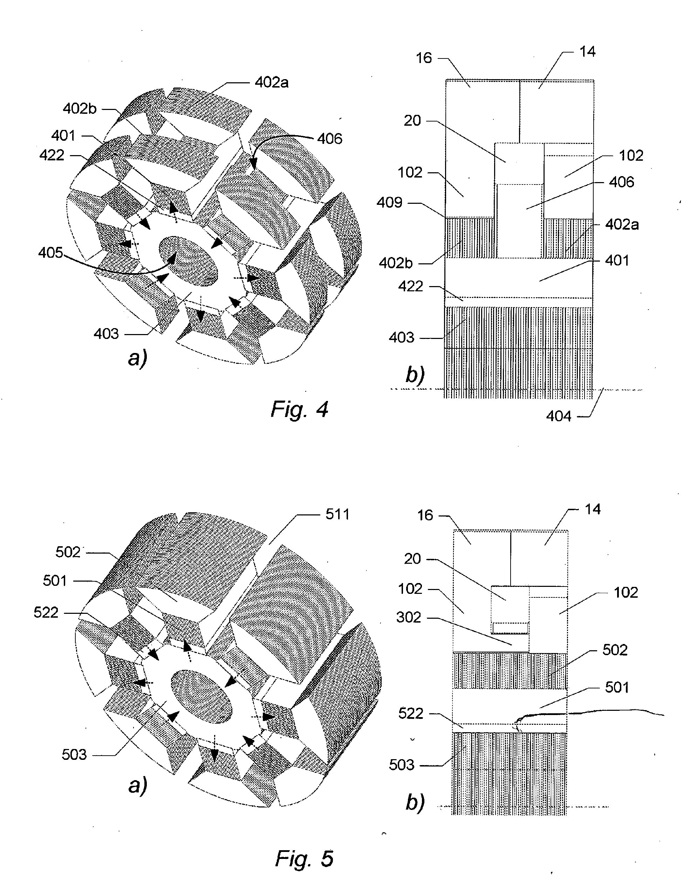

Figure 4 shows an example of a rotor for a modulated pole machine. In particular, fig. 4a shows a perspective view of a rotor while fig. 4b shows a cross sectional view of the rotor and a corresponding stator of a modulated pole machine, e.g. a stator as shown in fig. 2. The rotor of fig. 4 comprises a tubular central support member 403 that surrounds a longitudinal axis 404 of the rotor. The tubular support member defines a central opening 405 for receiving a shaft or axle to be driven by the rotor. The tubular support structure 403 is made of laminated annular steel sheets that are stacked in the axial direction, i.e. the lamination defines planes parallel to a radial/circumferential plane. The rotor further comprises an even number of permanent magnets 422 uniformly distributed around the outer circumferential surface of the tubular support member 403. Each permanent magnet extends axially along the axial lengths of the tubular support structure. In the example, the permanent magnets are formed as relatively thin plates having opposing rectangular surfaces. A radially inward surface is connected, e.g. glued, mechanically secured, or the like, to the outer surface of the tubular support member. The permanent magnets are magnetised in the radial direction of the rotor and provide a magnetic flux extending through the permanent magnet in the radial direction, i.e. through the radially inward surface and the radially outward surface opposite the radially inward surface. The permanent magnets are arranged with alternating polarity such that the neighbouring permanent magnets, seen in a circumferential direction, of each permanent magnet have a different orientation of its magnetic field than the permanent magnet to which they are neighbours.

The rotor further comprises a plurality of axial flux guiding members 401 providing at least an axial magnetic flux path, each disposed on the radially outward surface of a respective one of the permanent magnets. Each axial flux guiding member is formed as a block of laminated steel sheets. The steel sheets are rectangular sheets that are stacked in the circumferential direction so as to form a block having substantially the same axial and tangential dimension as the permanent magnets and to define planes in the axial and substantially radial directions.

The rotor further comprises a plurality of outer flux guiding members 402a and 402b such that two outer flux guiding members 402a,b are disposed on the radially outward surface of each of the axial flux guiding members 401. Hence, the axial flux guiding members and the outer flux guiding members together form respective radially extending rotor teeth or poles where the axial flux guiding members form the tooth-bodies while the outer flux guiding members form the tooth tips. The outer flux guiding members are formed as blocks of laminated steel sheets stacked in the axial direction. The sheets have a generally trapezoidal shape, but with the longer one of the parallel sides of the trapezoid formed as a curved line. The sheets are arranged in planes perpendicular to the longitudinal axis of the rotor, i.e. they define planes in the circumferential/radial plane. Furthermore, the laminated sheets are arranged with their curved sides radially outwards such that the outer flux guiding members together define a circular circumference. The outer flux guiding members have an axial length smaller than the axial dimension of the rotor, and they are arranged pairwise on the axial flux guiding members 401 such that they are separated in the axial direction by a central gap 406.

As illustrated in fig. 4b, when assembled as a part of an electric rotary machine, the outer flux guiding members are axially aligned with the teeth 14, 16 of one of the stator core sections of a stator. When the outer flux guiding members are circumferentially aligned with respective teeth, the rotor provides a three-dimensional flux path, wherein the radial flux extending through the permanent magnets 422 is axially concentrated in the axial flux guiding members 401 and radially fed by the outer flux guiding members towards the active air gap 409 and a corresponding tooth of the stator. The inner support member 403 provides a radial and circumferential flux path so as to allow the magnetic flux to communicate from one permanent magnet to a neighbouring permanent magnet. The rotor shown in fig. 4 is well-suited for use in a modulated pole machine comprising a stator as shown in fig. 2, namely a stator having teeth with no (or at least relatively small) claw poles, i.e. teeth that only extend along a part, e.g. less than half, of the axial extent of (a single-phase section of) the stator.

Hence, the different orientations of the laminates in the inner support member 403, the axial flux guiding members 401 and the outer flux guiding members 402a,b are chosen to support a three-dimensional flux path in the rotor including an at least axial flux concentration.

Figure 5 shows another example of a rotor for a modulated pole machine. In particular, fig. 5a shows a perspective view of a rotor while fig. 5b shows a cross sectional view of the rotor and a corresponding stator of a modulated pole machine, e.g. a claw pole stator as shown in fig. 3. The rotor of fig. 5 is similar to the rotor of fig. 4 and comprises a sheet-laminated, tubular inner support member 503, a plurality of radially magnetised permanent magnets 522 disposed with alternating polarity around the circumference of the inner support member 503, sheet-laminated axial flux guiding members 501 arranged radially outward of each permanent magnet, all as described in connection with fig. 4.

The rotor of fig. 5 further comprises sheet-laminated outer flux guiding members 502, similar to the outer flux guiding members 402a,b of fig. 4, but axially extending along the entire axial length of the rotor, or at least a substantial portion of the axial length of the rotor. Hence, in the example of fig. 5, only a single outer flux guiding member is connected to each axial flux guiding member 501.

The rotor of fig. 5 is thus particularly well-suited in combination with a claw pole stator, e.g. a stator as shown in fig. 3, as illustrated in fig. 5b.

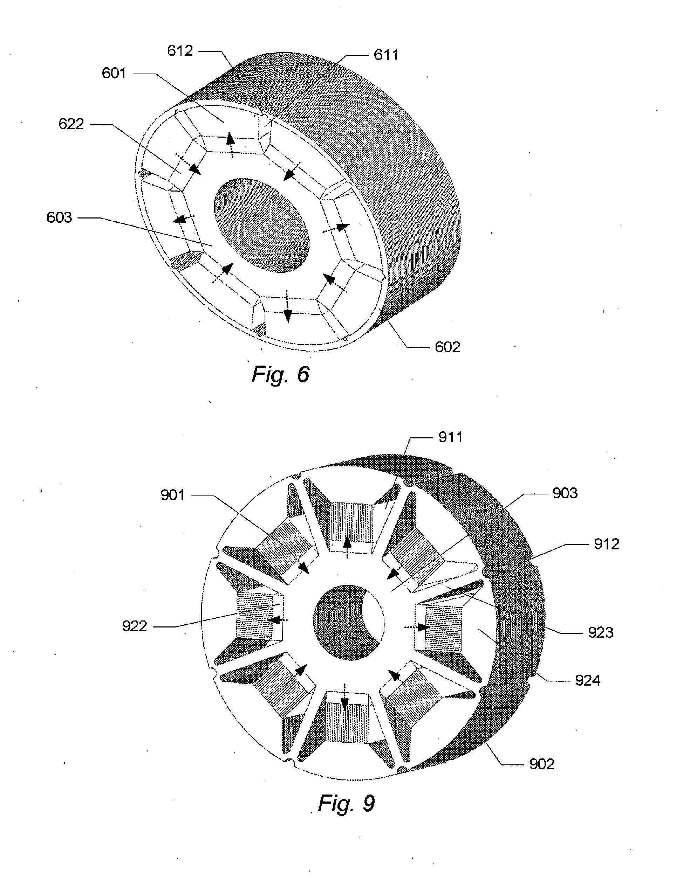

Figure 6 shows another example of a rotor for a modulated pole machine. The rotor of fig. 6 is similar to the rotor of fig. 5 in that it comprises a sheet-laminated, tubular inner support member 603 and a plurality of radially magnetised permanent magnets 622 disposed with alternating polarity around the circumference of the inner support member 603, all as described in connection with fig. 5.

The rotor of fig. 6 further comprises a plurality of axial flux guiding members 601, each disposed on the radially outward surface of a respective one of the permanent magnets 622. Each axial flux guiding member is formed as a block of a soft magnetic material, e.g. made from a soft magnetic powder using a suitable powder-metallurgical process. The soft magnetic axial flux guiding members 601 thus facilitate a flux path in all three dimensions, as the soft magnetic component does not include laminate planes that would effectively limit the flux path to two dimensions. Consequently, the soft magnetic axial flux guiding member 601 combines the flux guiding properties of the axial flux guiding member 501 and the outer flux guiding member 502 of fig. 5 in a single component.

Nevertheless, the rotor of fig. 6 comprises an outer flux guiding member 602 formed as a tubular structure or sleeve made of annular steel sheets stacked and laminated in the axial direction. The outer flux guiding member 602 surrounds the axial flux guiding members 601 and provides both an efficient radial magnetic flux path as well as an increased mechanical stability of the rotor, as it counterbalances the centrifugal forces acting on the permanent magnets and axial flux guiding members during high speed rotation of the rotor.

Furthermore, the use of a soft magnetic component as axial flux guiding member 601 allows the radial thickness of the axial flux guiding member to be reduced compared to the sum of radial thickness of the tooth-body and tooth-tip in the examples of figs. 4 and 5. This allows for tangentially wider magnets, since the permanent magnets can be placed on a larger diameter with a larger perimeter and the air-gap diameter is held constant. This can allow use of cheaper magnets (e.g. Ferrites) with an enlarged thickness and cross-sectional area to deliver equal magnetic field strength.

The tubular outer flux guiding member 602 is provided with axially extending grooves 612 circumferentially positioned between neighbouring axial flux guiding members 601, i.e. circumferentially aligned with the gaps 611. The grooves 612 result in a reduced thickness of the tubular structure, thus resulting in an increased magnetic resistance in the circumferential direction, thus reducing flux leakage.

The torque of an electrical machine, such as a modulated pole machine, is related to the magnetic flux that is crossing the airgap between stator and rotor components. The magnetic flux path always shows a closed continuous circuit.

In a modulated pole machine, the magnetic flux is induced by the permanent magnets and the electrical currents in the coils of the stator. Depending on the relative rotational position of the rotor and the stator, two types of torque may be distinguished: the synchronous torque and the reluctance torque.

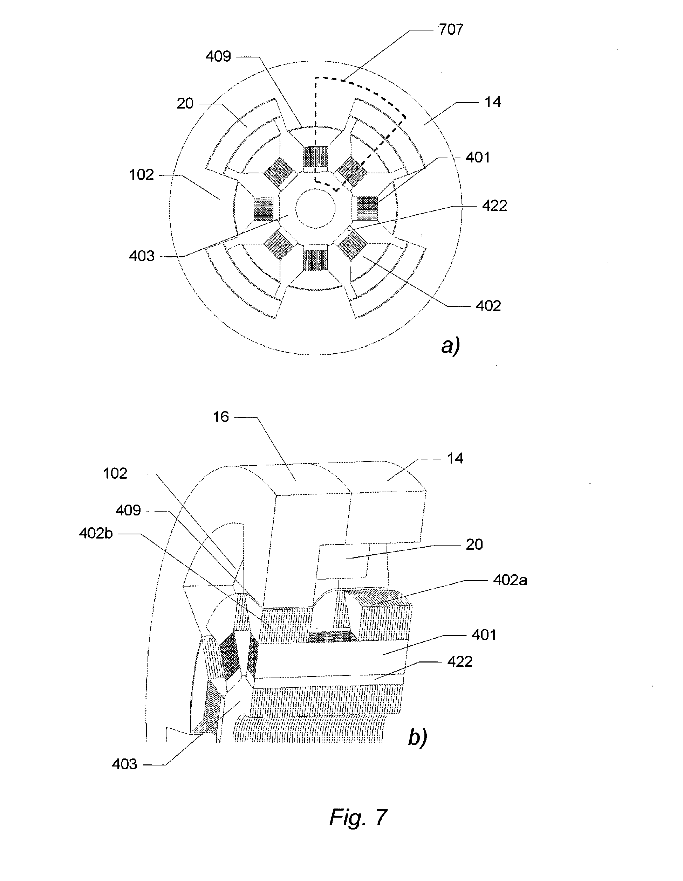

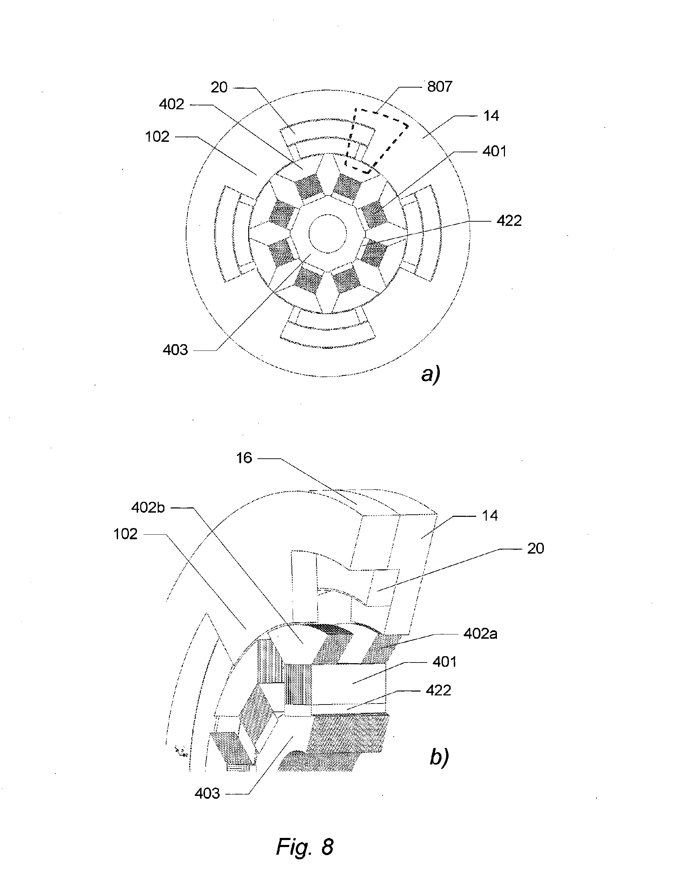

Figures 7 and 8 illustrate the flux paths of embodiments of rotors disclosed herein providing synchronous and reluctance torque, respectively. Figures 7 and 8 illustrate the flux paths of a rotor as shown in fig. 4. It will be appreciated that similar flux paths are provided by the other examples of rotors described herein.

Fig. 7 shows the rotor of fig. 4 in combination with a stator as shown in fig. 2. In particular, in fig. 7, the rotor is circumferentially positioned such that every other outer flux guiding member 402a,b is circumferentially aligned with a corresponding one of the stator teeth. The remaining outer flux guiding members are aligned with respective gaps between stator teeth. Hence, in the position shown in fig. 7, every permanent magnet has a flux path via one of the axial flux guiding members connected to it and via the active air gap 409 with a single stator tooth 102 of the stator. The magnetic flux path in this position is referred to as the synchronous torque flux path. An example of the synchronous torque flux path is illustrated in fig. 7 as lines 707.

Generally, the synchronous torque flux path 707 passes through the rotor permanent magnets 422. This flux peaks at the so-called d-axis position were the stator teeth and the rotor poles are circumferentially aligned with each other. This position is illustrated in fig. 7. The source for the synchronous torque is thus both the permanent magnet flux and the coil flux.

Fig. 8 shows the rotor of fig. 4 in combination with a stator as shown in fig. 2. In particular, in fig. 8, the rotor is circumferentially positioned such that each stator tooth 102 is circumferentially aligned with a gap between two neighbouring outer flux guiding members 402a,b such that each stator tooth has a common air gap with respective parts of two neighbouriong outer flux guiding members 402a,b. The magnetic flux path in this position is referred to as the reluctance torque flux path. An example of the reluctance torque flux path is illustrated in fig. 8 as lines 807.

Generally, the reluctance torque flux path 807 only passes through the soft magnetic steel structure of the rotor. This flux peaks at the so-called q-axis position where all the stator teeth are facing rotor poles at the same time i.e. when a slot between two rotor poles is centred in the middle of a stator tooth, as illustrated in fig. 8. This creates a short flux path with low reluctance that can result in additional torque of the machine. The source for the reluctance torque is the coil flux of the stator coil 20.

Figure 9 shows another example of a rotor for a modulated pole machine. The rotor of fig. 9 is similar to the rotor of fig. 5 in that it comprises a sheet-laminated, tubular inner support member 903, a plurality of radially magnetised permanent magnets 922 disposed with alternating polarity around the circumference of the inner support member 903, sheet-laminated axial flux guiding members 901 arranged radially outward of each permanent magnet 922, all as described in connection with fig. 5.

The rotor of fig. 9 further comprises sheet-laminated outer flux guiding members 902, similar to the outer flux guiding members 502 of fig. 5. However, while the outer flux guiding members 502 of fig. 5 are circumferentially separated from each other by respective gaps 511, the outer flux guiding members 902 are connected with each other by axially extending bridge portions 912 so as to form a continuous circumferential structure surrounding the axial flux guiding members 901.
Furthermore, the continuous circumferential structure is connected to the inner support member 903 by radially extending spokes 923 that extend along the gaps between neighbouring axial flux guiding members. Consequently, the inner support member 903, the outer flux guiding members 902, and the spokes 923 may be formed by a single sheet-laminated structure formed from generally annular steel sheets stacked in the axial direction, each having a central cut-out providing a central opening for a shaft, and circumferentially distributed cut-outs for receiving the permanent magnets and axial flux guiding members. Hence, a particularly easy to manufacture rotor structure is provided that provides efficient flux paths and high mechanical strength, even at high rotational speeds where the spokes prevent the continuous circumferential structure of the outer flux guiding member to be deformed.

At the bridge portion 912, the circumferential structure is provided with a reduced thickness so as to reduce flux leakage.

Even though the embodiment of fig. 9 is shown with axially continuous outer flux guiding members, similar to the example of fig. 5, it will be appreciated that the embodiment of fig. 9 may be modified so as to provide a pair of axially separated outer flux guiding members for each permanent magnet, similar to the embodiment of fig. 4. To this end, the steel laminated structure forming the inner support member, the outer flux guiding members and the spokes may be formed by steel sheets of different shapes, where the central sheets only provide an inner annular member and the axially peripheral sheets have the form shown in fig. 9.

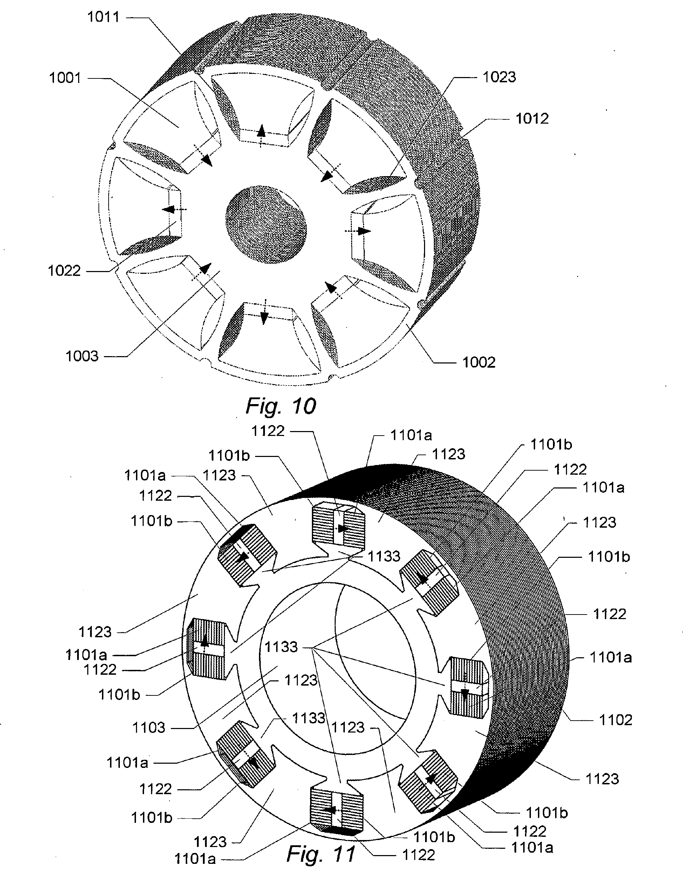

Fig. 10 shows another example of a rotor for a modulated pole machine. The rotor of fig. 10 is similar to the rotor of fig. 6 in that it comprises a sheet-laminated, tubular inner support member 1003, a plurality of radially magnetised permanent magnets 1022 disposed with alternating polarity around the circumference of the inner support member 1003, soft magnetic axial flux guiding members 1001 arranged radially outward of each permanent magnet 1022, and an outer flux guiding member 1002 formed as a tubular structure made of annular steel-sheet stacked and laminated in the axial direction, all as described in connection with fig. 6.

Furthermore, the tubular structure 1002 is connected to the inner support member 1003 by radially extending spokes 1023 that extend along the gaps between neighbouring axial flux guiding members 1001. Consequently, the inner support member 1003, the outer flux guiding member 1002, and the spokes 1023 may be formed by a single sheet-laminated structure formed from generally annular steel sheets stacked in the axial direction, each having a central cut-out providing a central opening for a shaft, and circumferentially distributed cut-outs for receiving the permanent magnets and axial flux guiding members.

Hence, the rotors of figs. 4-10 all comprise permanent magnets that are magnetised in the radial direction of the rotor as illustrated by dotted arrows in figs. 4-6, 9-10, and provide a magnetic flux extending through the permanent magnet in the radial direction, i.e. through the radially inward surface and the radially outward surface opposite the radially inward surface. The permanent magnets are arranged with alternating polarity such that the neighbouring permanent magnets, seen in a circumferential direction, of each permanent magnet have a different orientation of its magnetic field than the permanent magnet to which they are neighbours.

Figure 11 shows another example of a rotor for a modulated pole machine. The rotor of fig. 11 comprises a tubular central support member 1103 that surrounds a longitudinal axis of the rotor. The tubular support member defines a central opening for receiving a shaft or axle to be driven by the rotor. Generally, the tubular support structure 1103 may be made of any suitable material, e.g. non-magnetic material, e.g. aluminium, a magnesium alloy, a polymer-based material, a composited material, a fibre-material such as glass fibres, carbon-fibres or the like, or combinations of the above, as the support structure 1103 is not part of the magnetic circuit of the rotor. The rotor further comprises an even number of permanent magnets 1122 distributed around the outer circumferential surface of the tubular support member 1103. Each permanent magnet extends axially along the axial lengths of the tubular support structure. In the example of fig. 11, the permanent magnets are formed as relatively thin plates having opposing rectangular surfaces and side walls. A radially inward side wall abuts and may be connected, e.g. glued or otherwise mechanically secured, to the outer surface of the tubular support member. The permanent magnets are magnetised in the circumferential direction of the rotor and provide a magnetic flux extending through the permanent magnet in the circumferential/tangential direction as illustrated by dotted arrows, i.e. through the rectangular surfaces. The permanent magnets are arranged with alternating polarity such that the neighbouring permanent magnets, seen in a circumferential direction, of each permanent magnet have a different orientation of its magnetic field than the permanent magnet to which they are neighbours. In the example of fig. 11, the inner support member comprises axially extending ridges 1133, e.g. radially protruding extrusions of the inner support member, on which the permanent magnets are disposed. The ridges support the torque loads. The magnets may be glued to this structure, but since the large laminated ring supports the magnets and axial flux members in the radial direction, an additional fixation of the magnets may not be necessary. Each permanent magnet is sandwiched in the circumferential direction between two axial flux guiding members 1101a,b. Each axial flux guiding member is formed as a block of laminated steel sheets. The steel sheets are rectangular sheets that are stacked so as to form a block having substantially the same axial and radial dimension as the permanent magnets and to define planes in the axial and tangential directions (tangential at the position of the permanent magnet). Hence, the axial flux guiding members 1101 a,b provide an axial and tangential flux path to the magnetic flux exiting/entering the permanent magnets in circumferential direction.

The rotor further comprises an outer flux guiding member 1102 formed as a tubular structure including spoke members 1123 extending radially inward from the tubular support structure and separating neighbouring sets of permanent magnets and axial flux guiding members. The outer flux guiding member and the spoke members are made of annular steel sheets stacked and laminated in the axial direction. The outer flux guiding member 1102 surrounds the axial flux guiding members 1101 a,b and the permanent magnets and provides both an efficient radial and circumferential magnetic flux path as well as an increased mechanical stability of the rotor, as it counterbalances the centrifugal forces acting on the permanent magnets and axial flux guiding members during high speed rotation of the rotor. The ridges 1133 have a wedge-shaped cross section with a narrow base and a wider radially outward portion. The spokes 1123 have a correspondingly wider radially inward end, thus allowing the spokes to engage and be restrained by the ridges. Alternatively or additionally, the spokes may be coupled to the inner support member 1103 in another way.

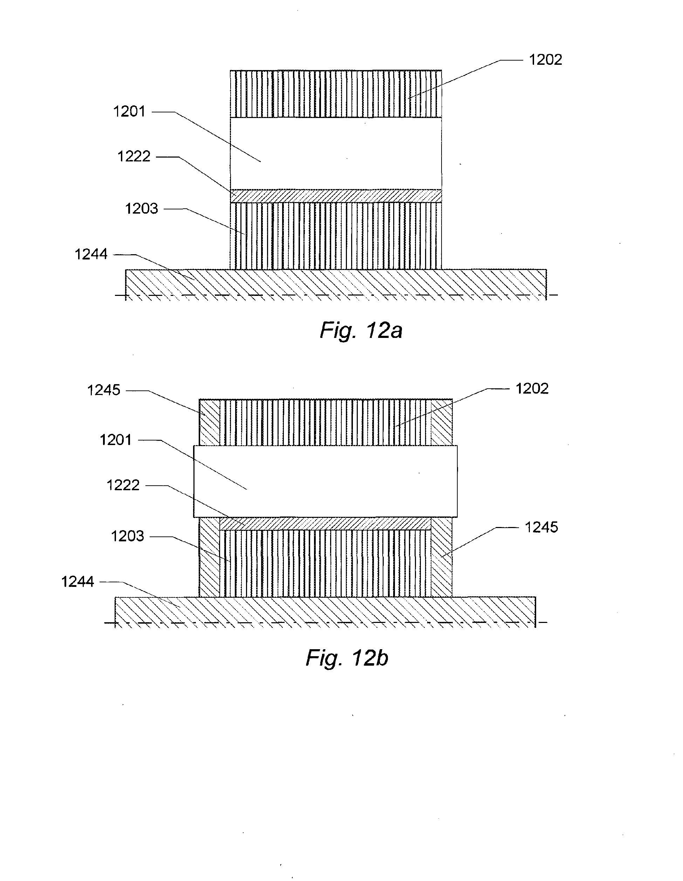

In the various embodiments described herein, the axial flux guiding members may be restrained against centrifugal forces at the axial ends of the rotor core, e.g. by endplates, as illustrated in figs. 12a-d.

Figs. 12a-d show cross-sectional views in a radial-axial plane of different embodiments of a rotor.

Fig. 12a shows a cross-sectional view in a radial-axial plane of the rotor of fig. 5 comprising a sheet-laminated, tubular inner support member 1203, a plurality of radially magnetised permanent magnets 1222 disposed with alternating polarity around the circumference of the inner support member 1203, sheet-laminated axial flux guiding members 1201 arranged radially outward of each permanent magnet, and sheet-laminated outer flux guiding members 1202, all as described in connection with fig. 5. Fig. 12a further illustrates a central shaft 1244 onto which the rotor may be mounted.

Fig. 12b shows a cross-sectional view in a radial-axial plane of a rotor similar to the rotor of fig. 12a, but where axial flux guiding member 1201 axially extends beyond the permanent magnets 1222 and the outer flux guiding member 1202. The rotor comprises end plates 1245 between which the permanent magnets 1222 and the outer flux guiding member 1202 are sandwiched in the axial direction. The axial flux guiding member 1201 axially projects through corresponding holes in the end plates 1245. The end plates may be made from a non-magnetic material, e.g. aluminium, a magnesium alloy, a polymer-based material, a composited material, a fibre-material such as glass fibres, carbon-fibres or the like, or combinations of the above. The end plates support the rotor structure mechanically at high-speeds and loads.

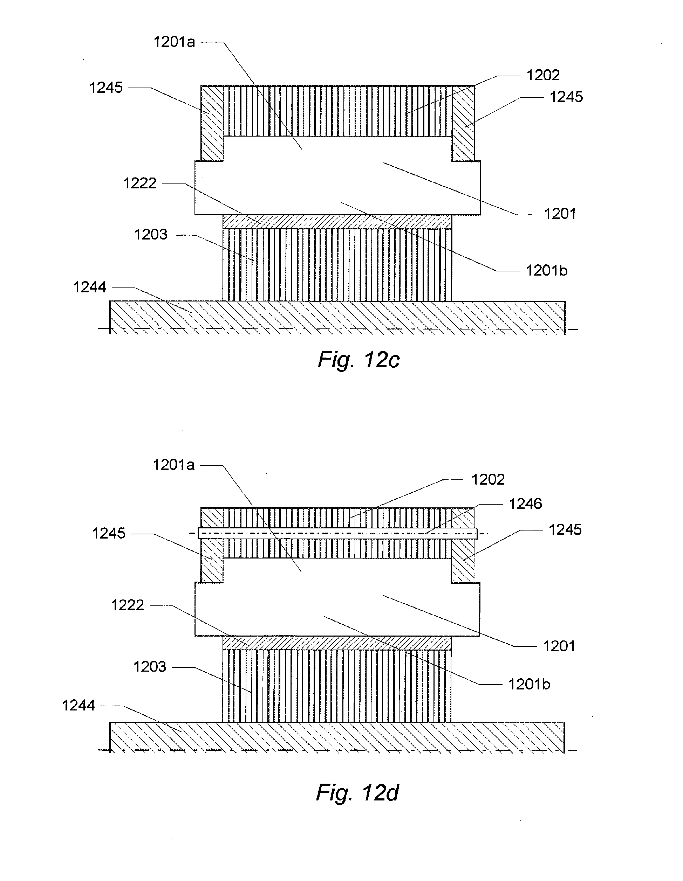

Fig. 12c shows a cross-sectional view in a radial-axial plane of a rotor similar to the rotor of fig. 12b, but where the axial flux guiding member 1201 has a narrow portion 1201 a that has the same axial length as the outer flux guiding member, and an extended portion 1201 b that axially projects through corresponding holes in the end plates 1245. In the example of fig. 12c the narrow portion is radially outwards and the extended portion is radially inwards. In the example of fig. 12c, the end plates 1245 have the form of annular plates that radially cover the outer flux guiding member and the narrow portion of the axial flux guiding member. The end plates and the partly axially extending axial flux guiding members support the rotor structure mechanically at high-speeds and loads.

Fig. 12d shows a cross-sectional view in a radial-axial plane of a rotor similar to the rotor of fig. 12c, but where the outer flux guiding member 1202 is further supported by an axially extending pin 1246. The pin 1246 extends through corresponding holes the laminated sheets of the outer flux guiding member and corresponding holes in the end plates 1245. Hence, the pin is supported by the non-magnetic end plates.

It will be appreciated that even though an axial restrain of the flux guiding members has been illustrated with reference to the rotor of fig. 5, the flux guiding members of the other embodiments of a rotor described herein may be restrained in the same fashion.

For example, when non-magnetic end plates are added to the rotor of fig. 9, the load on the bridges 923 are reduced, as the bridges 923 then only need to support the laminates 924.

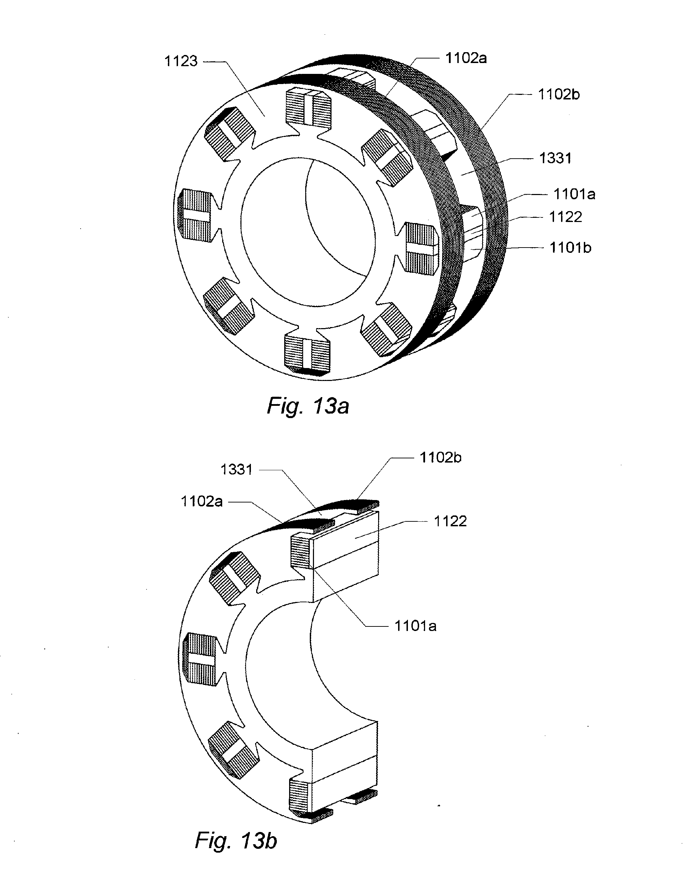

Figs. 13a and 13b show another example of a rotor for a modulated pole machine. The rotor of figs. 13a-b is similar to the rotor of fig. 11 and will thus not be described in detail again. The rotor of figs. 13a-b differs from the rotor in fig. 11 in that the rotor of figs. 13a-b comprises two outer flux guiding members 1102a and 1102b, arranged proximal to the respective axial ends of the rotor, thus leaving a circumferential gap 1331 between them. Each of the two flux guiding members is formed as a tubular structure including spoke members 1123 extending radially inward from the tubular structure and separating neighbouring sets of permanent magnets and axial flux guiding members. The outer flux guiding members and the spoke members are made of annular steel sheets stacked and laminated in the axial direction. Each of the outer flux guiding members 1102a-b surrounds the axial flux guiding members 1101 a,b and the permanent magnets 1122 and provides both an efficient radial and circumferential magnetic flux path as well as an increased mechanical stability of the rotor, as it counterbalances the centrifugal forces acting on the permanent magnets and axial flux guiding members during high speed rotation of the rotor. The axial width of each outer flux guiding member may be selected so as to match the axial width of the active air gap formed with the stator.

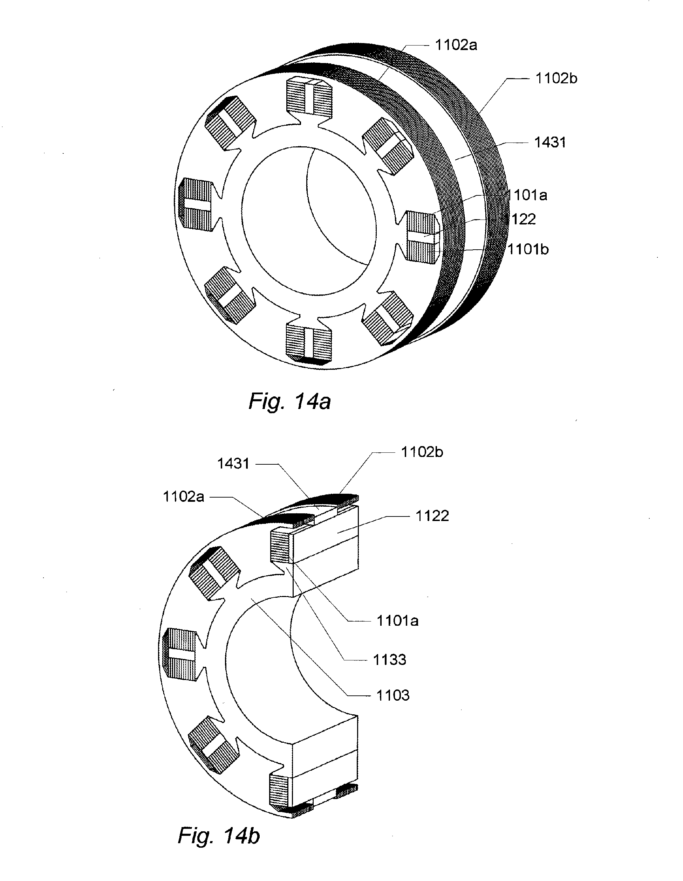

Figs. 14a and 14b show another example of a rotor for a modulated pole machine. The rotor of figs. 14a-b is similar to the rotor of figs. 13a-b and will thus not be described in detail again. In particular, the rotor of fig.s 14a-b also comprises two outer flux guiding members 1102a and 1102b, arranged proximal to the respective axial ends of the rotor, thus leaving a circumferential gap between them. In the example of fig. 14a-b, a circumferential sleeve 1431 is arranged in the gap between the outer flux guiding members. The sleeve 1431 restrains the permanent magnets and/or axial flux guiding members against centrifugal forces. The sleeve 1431 may be made from a non-magnetic material, such as aluminium, a magnesium alloy, a polymer-based material, a composited material, a fibre-material such as glass fibres, carbon-fibres or the like, or combinations of the above. Hence, the sleeve increases the mechanical stability of the rotor without negatively influencing the magnetic flux.

Although some embodiments have been described and shown in detail, the invention is not restricted to them, but may also be embodied in other ways within the scope of the subject matter defined in the following claims. In particular, it is to be understood that other embodiments may be utilised, and that structural and functional modifications may be made without departing from the scope of the present invention.

Embodiments of the invention disclosed herein may be used for a direct wheel drive motor for an electric-bicycle or other electrically driven vehicle, in particular a light-weight vehicle. Such applications may impose demands on high torque, relatively low speed and low cost. These demands may be fulfilled by a motor with a relatively high pole number in a compact geometry using a small volume of permanent magnets and wire coils to fit and to meet cost demands by the enhanced rotor assembly routine.

In device claims enumerating several means, several of these means can be embodied by one and the same item of hardware. The mere fact that certain measures are recited in mutually different dependent claims or described in different embodiments does not indicate that a combination of these measures cannot be used to advantage.

It should be emphasized that the term "comprises/comprising" when used in this specification is taken to specify the presence of stated features, integers, steps or components but does not preclude the presence or addition of one or more other features, integers, steps, components or groups thereof.

## Claims

1. A rotor for an inner-rotor modulated pole machine, the rotor being configured to generate a rotor magnetic field for interaction with a stator magnetic field of a stator of the modulated pole machine, wherein said rotor is adapted to rotate around a longitudinal axis of the rotor; wherein the rotor comprises:
- a plurality of permanent magnets (422) arranged circumferentially around the longitudinal axis, each permanent magnet being magnetised in a direction of magnetisation so as to generate either a radial or a tangential magnetic flux
- a plurality of axial flux guiding members (401) each in contact with said plurality of permanent magnets and adapted to provide an at least two-dimensional flux path for the magnetic flux generated by a respective one of the plurality of permanent magnets, the two-dimensional flux path comprising an axial component,
- a support structure comprising an inner tubular support member (403) arranged radially inward of the plurality of permanent magnets and supporting said magnets (422); and
- at least one outer flux guiding member (402a, 402b) disposed on or surrounding a corresponding axial flux guiding member and adapted to provide a path in at least a radial direction for the magnetic flux generated by one or more of the plurality of permanent magnets directing said flux towards the stator, wherein the axial flux guiding members are separate components different from the outer flux guiding member.

2. A rotor according to claim 1, wherein the outer flux guiding member comprises an outer tubular support structure (602, 902) surrounding the permanent magnets (922) and the axial flux guiding members (601, 901).

3. A rotor according to claim 2, further comprising a plurality of spoke members (923) radially extending between the outer tubular support structure and the inner tubular support member (903).

4. A rotor according to claim 3, wherein the spoke members are formed as integral parts of at least one of the outer flux guiding member and the inner tubular support member (903).

5. A rotor according to claims 3 or 4; wherein the permanent magnets are circumferentially separated from each other by respective spoke members.

6. A rotor according to any one of claims 3 through 5, wherein the spoke members are further adapted to provide a magnetic flux path at least in a radial direction.

7. A rotor according to any one of claims 3 through 6, wherein the spoke members are made of laminated metal sheets.

8. A rotor according to claim 7, wherein the laminated metal sheets forming the spoke members are arranged in respective radial-circumferential planes.

9. A rotor according to any one of the preceding claims, wherein the outer flux guiding member is made of laminated metal sheets.

10. A rotor according to claim 9, wherein the laminated metal sheets forming the outer flux guiding member are arranged in respective radial-circumferential planes.

11. A rotor according to any one of the preceding claims, wherein the inner tubular support member is made of laminated metal sheets.

12. A rotor according to claim 11, wherein the laminated metal sheets forming the inner tubular support member are arranged in respective radial-circumferential planes.

13. A rotor according to any one of claims 1 through 10, wherein the inner tubular support member is made of a non-magnetic material.

14. A rotor according to any one of the preceding claims, wherein each of the plurality of axial flux guiding members is made of laminated metal sheets.

15. A rotor according to claim 14, wherein the laminated metal sheets forming each of the plurality of axial flux guiding members are arranged in respective planes having at least an axial and a circumferential extent.

16. A rotor according to claim 14, wherein the laminated metal sheets forming each of the plurality of axial flux guiding members are arranged in respective planes having at least an axial and a radial extent.

17. A rotor according to any one of claims 1 through 13, wherein each of the plurality of axial flux guiding members is made from a soft magnetic material providing a three-dimensional flux path.

18. A rotor according to any one of the preceding claims, wherein the direction of magnetisation of the permanent magnets has at least a radial component.

19. A rotor according to any one of the preceding claims, wherein the direction of magnetisation of the permanent magnets has at least a circumferential component.

20. A electrical machine comprising a stator and a rotor as defined in any one of claims 1 through 19.

## Patentansprüche

1. Rotor für eine modulierte Polmaschine mit Innenrotor, wobei der Rotor so eingerichtet ist, dass er ein Rotormagnetfeld für die Wechselwirkung mit einem Statormagnetfeld eines Stators der modulierten Polmaschine erzeugt, wobei der Rotor so ausgelegt ist, dass er sich um eine Längsachse des Rotors dreht; wobei der Rotor Folgendes umfasst:
- eine Vielzahl von Dauermagneten (422), die in Umfangsrichtung um die Längsachse herum angeordnet sind, wobei jeder Dauermagnet in einer Magnetisierungsrichtung magnetisiert ist, um entweder einen radialen oder einen tangentialen Magnetfluss zu erzeugen,
- eine Vielzahl von axialen Flussleitelementen (401), die jeweils die Vielzahl von Dauermagneten berühren und so ausgelegt sind, dass sie einen zumindest zweidimensionalen Flussweg für den Magnetfluss bereitstellen, der von einem jeweiligen aus der Vielzahl von Dauermagneten erzeugt wird, wobei der zweidimensionale Flussweg eine axiale Komponente umfasst,
- eine Trägerkonstruktion, die ein inneres röhrenförmiges Trägerelement (403) umfasst, das zu der Vielzahl von Dauermagneten radial nach innen angeordnet ist und die Magnete (422) hält; und
- mindestens ein äußeres Flussleitelement (402a, 402b), das an einem entsprechenden axialen Flussleitelement angeordnet ist oder es umgibt und so ausgelegt ist, dass es einen Weg in zumindest einer radialen Richtung für den Magnetfluss bereitstellt, der von einem oder mehreren von der Vielzahl von Dauermagneten erzeugt wird, und den Fluss in Richtung des Stators leitet, wobei die axialen Flussleitelemente separate Bauteile sind, die sich von dem äußeren Flussleitelement unterscheiden.

2. Rotor nach Anspruch 1, wobei das äußere Flussleitelement eine äußere rohrförmige Trägerkonstruktion (602, 902) umfasst, die die Dauermagneten (922) und die axialen Flussleitelemente (601, 901) umgibt.

3. Rotor nach Anspruch 2, der ferner eine Vielzahl von Speichenelementen (923) umfasst, die radial zwischen der äußeren röhrenförmigen Trägerkonstruktion und dem inneren röhrenförmigen Trägerelement (903) verlaufen.

4. Rotor nach Anspruch 3, wobei die Speichenelemente als einteilige Teile von dem äußeren Flussleitelement und/oder dem inneren röhrenförmigen Trägerelement (903) ausgebildet sind.

5. Rotor nach Anspruch 3 oder 4; wobei die Dauermagnete in Umfangsrichtung voneinander durch jeweilige Speichenelemente getrennt sind.

6. Rotor nach einem der Ansprüche 3 bis 5, wobei die Speichenelemente ferner so ausgelegt sind, dass sie für einen Magnetflussweg zumindest in einer radialen Richtung sorgen.

7. Rotor nach einem der Ansprüche 3 bis 6, wobei die Speichenelemente aus geschichteten Blechen gefertigt sind.

8. Rotor nach Anspruch 7, wobei die geschichteten Bleche, die die Speichenelemente bilden, in jeweiligen radialen Umfangsebenen angeordnet sind.

9. Rotor nach einem der vorhergehenden Ansprüche, wobei das äußere Flussleitelement aus geschichteten Blechen gefertigt ist.

10. Rotor nach Anspruch 9, wobei die geschichteten Bleche, die das äußere Flussleitelement bilden, in jeweiligen radialen Umfangsebenen angeordnet sind.

11. Rotor nach einem der vorhergehenden Ansprüche, wobei das innere röhrenförmige Trägerelement aus geschichteten Blechen gefertigt ist.

12. Rotor nach Anspruch 11, wobei die geschichteten Bleche, die das innere röhrenförmige Trägerelement bilden, in jeweiligen radialen Umfangsebenen angeordnet sind.

13. Rotor nach einem der Ansprüche 1 bis 10, wobei das innere röhrenförmige Trägerelement aus einem unmagnetischen Material gefertigt ist.

14. Rotor nach einem der vorhergehenden Ansprüche, wobei jedes von der Vielzahl axialer Flussleitelemente aus geschichteten Blechen gefertigt ist.

15. Rotor nach Anspruch 14, wobei die geschichteten Bleche, die jedes von der Vielzahl axialer Flussleitelemente bilden, in jeweiligen Ebenen mit zumindest einer axialen Erstreckung und einer Erstreckung in Umfangsrichtung angeordnet sind.

16. Rotor nach Anspruch 14, wobei die geschichteten Bleche, die jedes von der Vielzahl axialer Flussleitelemente bilden, in jeweiligen Ebenen mit zumindest einer axialen und einer radialen Erstreckung angeordnet sind.

17. Rotor nach einem der Ansprüche 1 bis 13, wobei jedes von der Vielzahl axialer Flussleitelemente aus einem weichmagnetischen Material gefertigt ist, das für einen dreidimensionalen Flussweg sorgt.

18. Rotor nach einem der vorhergehenden Ansprüche, wobei die Magnetisierungsrichtung der Dauermagnete zumindest eine radiale Komponente aufweist.

19. Rotor nach einem der vorhergehenden Ansprüche, wobei die Magnetisierungsrichtung der Dauermagnete zumindest eine Umfangskomponente aufweist.

20. Elektrische Maschine, die einen Stator und einen Rotor nach einem der Ansprüche 1 bis 19 umfasst.

## Revendications

1. Rotor pour une machine à pôles modulée à rotor interne, le rotor étant configuré pour générer un champ magnétique rotorique pour l'interaction avec un champ magnétique statorique d'un stator de la machine à pôles modulée, ledit rotor étant adapté pour tourner autour d'un axe longitudinal du rotor ; le rotor comprenant :
- une pluralité d'aimants permanents (422) disposés de manière circonférentielle autour de l'axe longitudinal, chaque aimant permanent étant magnétisé dans une direction de magnétisation de façon à générer un flux magnétique soit radial soit tangentiel,
- une pluralité d'éléments de guidage de flux axiaux (401) chacun en contact avec ladite pluralité d'aimants permanents et adapté pour fournir un chemin de flux au moins à deux dimensions pour le flux magnétique généré par un aimant permanent respectif de la pluralité d'aimants permanents, le chemin de flux à deux dimensions comprenant une composante axiale,
- une structure de support comprenant un élément de support tubulaire intérieur (403) disposé radialement vers l'intérieur par rapport à la pluralité d'aimants permanents et supportant lesdits aimants (422) ; et
- au moins un élément de guidage de flux extérieur (402a, 402b) disposé sur ou autour d'un élément de guidage de flux axial correspondant et adapté pour fournir un chemin dans au moins une direction radiale pour le flux magnétique généré par un ou plusieurs aimants permanents de la pluralité d'aimants permanents orientant ledit flux vers le stator, les éléments de guidage de flux axiaux étant des composants séparés différents de l'élément de guidage de flux extérieur.

2. Rotor selon la revendication 1, l'élément de guidage de flux extérieur comprenant une structure de support tubulaire extérieure (602, 902) entourant les aimants permanents (922) et les éléments de guidage de flux axiaux (601, 901).

3. Rotor selon la revendication 2, comprenant en outre une pluralité d'éléments de rayon (923) s'étendant de manière radiale entre la structure de support tubulaire extérieure et l'élément de support tubulaire intérieur (903).

4. Rotor selon la revendication 3, les éléments de rayon étant formés comme parties intégrantes d'au moins un parmi l'élément de guidage de flux extérieur et l'élément de support tubulaire intérieur (903).

5. Rotor selon la revendication 3 ou 4, les aimants permanents étant séparés de manière circonférentielle les uns des autres par des éléments de rayon respectifs.

6. Rotor selon l'une quelconque des revendications 3 à 5, les éléments de rayon étant en outre adaptés pour fournir un chemin de flux magnétique au moins dans une direction radiale.

7. Rotor selon l'une quelconque des revendications 3 à 6, les éléments de rayon étant fabriqués en feuilles métalliques stratifiées.

8. Rotor selon la revendication 7, les feuilles métalliques stratifiées formant les éléments de rayon étant disposées dans des plans radio-concentriques respectifs.

9. Rotor selon l'une quelconque des revendications précédentes, l'élément de guidage de flux extérieur étant fabriqué en feuilles métalliques stratifiées.

10. Rotor selon la revendication 9, les feuilles métalliques stratifiées formant l'élément de guidage de flux extérieur étant disposées dans des plans radio-concentriques respectifs.

11. Rotor selon l'une quelconque des revendications précédentes, l'élément de support tubulaire intérieur étant fabriqué en feuilles métalliques stratifiées.

12. Rotor selon la revendication 11, les feuilles métalliques stratifiées formant l'élément de support tubulaire intérieur étant disposées dans des plans radio-concentriques respectifs.

13. Rotor selon l'une quelconque des revendications 1 à 10, l'élément de support tubulaire intérieur étant fabriqué en un matériau non magnétique.

14. Rotor selon l'une quelconque des revendications précédentes, chacun de la pluralité d'éléments de guidage de flux axiaux étant fabriqué en feuilles métalliques stratifiées.

15. Rotor selon la revendication 14, les feuilles métalliques stratifiées formant chacun de la pluralité d'éléments de guidage de flux axiaux étant disposées dans des plans respectifs présentant au moins une extension axiale et une extension circonférentielle.

16. Rotor selon la revendication 14, les feuilles métalliques stratifiées formant chacun de la pluralité d'éléments de guidage de flux axiaux étant disposées dans des plans respectifs présentant au moins une extension axiale et une extension radiale.

17. Rotor selon l'une quelconque des revendications 1 à 13, chacun de la pluralité d'éléments de guidage de flux axiaux étant fabriqué en un matériau magnétique doux fournissant un chemin de flux à trois dimensions.

18. Rotor selon l'une quelconque des revendications précédentes, la direction de magnétisation des aimants permanents présentant au moins une composante radiale.

19. Rotor selon l'une quelconque des revendications précédentes, la direction de magnétisation des aimants permanents présentant au moins une composante circonférentielle.

20. Machine électrique comprenant un stator et un rotor tels que défini dans l'une quelconque des revendications 1 à 19.
